# FASCICULE DE BREVET EUROPEEN

(11) **EP 3 013 661 B1**
(45) Date de publication et mention de la délivrance du brevet: **02.08.2017**
(21) Numéro de dépôt: 14750532.5
(22) Date de dépôt: 17.06.2014
(51) Int. Cl.: B60W 50/00

(54) **SYSTEME ET METHODE DE COMMANDE ELECTRIQUE D'ACTIONNEURS DANS UN VEHICULE AUTOMOBILE**
SYSTEM UND VERFAHREN ZUR ELEKTRISCHEN STEUERUNG VON AKTUATOREN IN EINEM KRAFTFAHRZEUG
SYSTEM AND METHOD FOR ELECTRICALLY CONTROLLING ACTUATORS IN A MOTOR VEHICLE

(30) Priorité: 25.06.2013 FR 1356060
(43) Date de publication de la demande: 04.05.2016
(73) Titulaire: Peugeot Citroën Automobiles SA, 78140 Vélizy Villacoublay (FR)
(72) Inventeur: DAMEY, Walter, F-93250 Villemomble (FR); UNTERNAHRER, Marc, F-92300 Levallois Perret (FR)
(86) Numéro de dépôt international: PCT/FR2014/051485
(87) Numéro de publication internationale: WO 2014/207345

(56) Documents cités:
- DE-A1-102005 010 289
- US-A1- 2011 094 224
- US-A1- 2013 096 800

## Description

L'invention a trait au domaine des véhicules automobiles et plus particulièrement à un dispositif de pilotage de fonctions automobiles disposant d'un actionneur.

Par actionneur, on entend ici tout dispositif permettant de réaliser une fonction ayant un ou plusieurs états, en réponse à une commande.

A titre d'exemple, une commande peut consister en la transmission d'un signal analogique (tension, courant) ou numérique à un actionneur tel qu'un moteur, permettant le fonctionnement d'un dispositif mécanique dans un premier ou dans un second sens.

Les normes européennes d'émission Euro réglementent les limites maximales de rejet d'émission de polluants pour les véhicules roulants vendus neufs (utilitaires, motos, poids lourds), comportant un moteur à essence, diesel ou GPL. Ces normes deviennent de plus en plus restrictives au fil des années, poussant les constructeurs automobiles à adapter leurs nouveaux véhicules à ces normes. A titre d'exemple, le passage de la norme Euro 5 à Euro 6 imposera pour les moteurs Diesel un seuil d'émission d'oxydes d'azote maximal de 80mg/km maximum contre 180mg/km auparavant.

Afin de répondre à l'ensemble de ces problématiques, un certain nombre de dispositifs tel que l'EGR (Exhaust Gas Recirculation) ont été rajoutés dans les véhicules en complément de fonctions déjà existantes telles que le Thermomanagement.

Par « Thermomanagement », on entend, ici, tout système de gestion de la température. A titre d'exemple dans le domaine automobile, le Thermomanagement assure la régulation en température du moteur, de la boucle EGR (recirculation des gaz d'échappement) et de l'aérotherme (refroidissement/chauffage de l'habitacle du véhicule). Cette régulation est assurée par le contrôle du débit d'eau circulant dans chacune des branches des circuits d'eau de refroidissement de ces systèmes.

De plus, avec l'apparition ces dernières années de l'électrification des contrôles commandes, de nouvelles contraintes sont apparues dans le système Electricité Electronique (EE). Ces contraintes en termes de système EE induisent :
- des problèmes de maîtrise des métriques logicielles au niveau des calculateurs ;
- des problèmes de connectiques, notamment au niveau du calculateur moteur multifonction (CMM) ;
- des problèmes de packaging concernant le CMM, comprenant aussi bien les aspects d'implantations des composants électroniques sur son circuit imprimé, que la tenue thermique du circuit imprimé et de ses composants ;
- des problèmes de coûts liés aux composants.

La tenue thermique du circuit imprimé est particulièrement critique, car un grand nombre d'activations simultanées de composants électroniques de puissance génèrent un appel de courant, induisant une élévation de la température desdits composants. La surface dédiée à ces composants étant compacte, le refroidissement s'avère vite inefficace. Il en résulte un risque de dysfonctionnement des composants, de création de points chauds, voire d'échauffements aggravés (ECA) dégradant le circuit imprimé et donc le routage.

Un des composants électronique de puissance couramment mis en oeuvre dans les calculateurs moteurs est le pont en H. Dans sa structure générale, un pont en H est une structure électronique comprenant quatre composants électroniques de commutation, par exemple des transistors ou des relais, disposés de manière à contrôler la polarisation d'un dipôle. A titre d'exemple, un courant peut circuler alternativement dans un sens ou l'autre à travers un dispositif, tel qu'un moteur ou une charge.

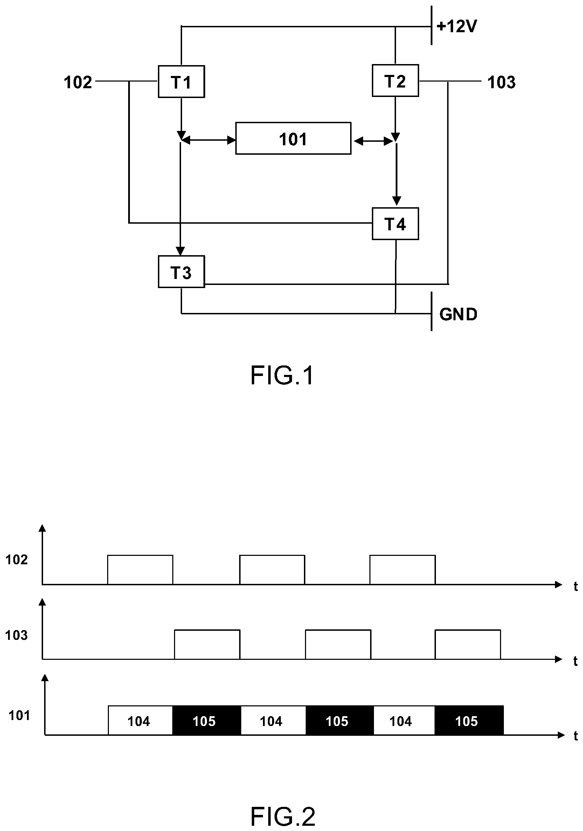

Un exemple de pont en H est illustré sur la Figure 1. Celui-ci peut être composé, à titre d'exemple, de quatre transistors T1, T2, T3, T4 permettant le pilotage électronique selon deux états d'une fonction (ex: pilotage bidirectionnel) d'au moins un actionneur 101.

T1 et T4 sont polarisés par une première commande 102 fournie par le CMM, tandis que T2 et T3 sont polarisés par une seconde commande 103 fournie par le CMM.

Le chronogramme de la Figure 2, illustre à titre d'exemple la réponse d'un actionneur 101 en fonction des commandes 102 et 103 appliquées aux transistors.

La commande 102 de polarisation de T1 et T4 permet de piloter/commander l'actionneur 101 pour réaliser un premier état d'une fonction 104 (par ex. un premier sens de fonctionnement), tandis que la commande 103 de polarisation de T2 et T3 permet le pilotage/la commande de l'actionneur 101 pour réaliser un deuxième état 105 de la fonction (par ex. un deuxième sens de fonctionnement).

A titre d'exemple non-limitatif, une structure électronique comprenant un pont en H permet de piloter dans un système EGR (fonction) l'ouverture 104 (premier état de la fonction) ou la fermeture 105 (deuxième état de la fonction) d'une vanne par un actionneur 101, via l'application d'une première commande 102 ou d'une seconde commande 103, comme illustré sur le chronogramme de la Figure 2.

Compte tenu du nombre croissant d'amendements nécessaires pour répondre aux différentes normes européennes, les calculateurs CMM arrivent à saturation en termes de composants de puissance. L'utilisation de fonctions faisant appels à des actionneurs pilotés/commandés électroniquement, nécessitent notamment la mise en oeuvre de ponts en H.

A titre d'exemple, la gestion des fonctions de doseur d'admission d'air, EGR haute-pression (EGR-HP) et de gestion hydraulique eau moteur (GHEM) développés dans le cadre d'un précédent projet de véhicule du constructeur PSA Peugeot Citroën, nécessitaient 3 ponts en H. Dans le cadre d'un nouveau projet de véhicule, plusieurs fonctions nécessitent l'utilisation d'un actionneur piloté/commandé électroniquement : l'EGR basse-pression (EGR-BP), l'EGR-HP, le doseur d'admission d'air, le Thermomanagement, et le turbocompresseur à commande électrique (eTurbo). Par conséquent, au moins cinq ponts en H sont nécessaires, afin de commander les actionneurs assurant ces fonctions.

Cependant, plus le nombre de composants de puissance devient important, plus un nombre élevé de ponts thermiques est nécessaire, afin de garantir une dissipation thermique efficace.

Une première limite provient du fait que la zone où sont implantés les ponts thermiques sur le circuit imprimé n'est pas extensible, ce qui limite d'autant plus le nombre de composants de puissance utilisables, tels les ponts en H.

De plus, selon les préconisations des constructeurs de calculateurs le nombre de quatre ponts en H ne doit pas être dépassé afin de garantir la bonne tenue thermique des composants électroniques intégrés dans les calculateurs.

Les ponts en H étant maintenant mis en oeuvre sous forme de circuits intégrés sur circuit imprimé, et non plus via l'utilisation de composants électroniques discrets, l'utilisation de cinq ponts en H n'est pas compatible en termes de tenue thermique du calculateur CMM.

Le nombre de fonctions ne peut pas non-plus être revu à la baisse car celles-ci sont garantes tant de la sûreté de fonctionnement du véhicule que de la réduction d'émission de CO₂.

Un premier objectif est de remédier aux inconvénients précités, tout en répondant aux contraintes fonctionnelles et de sûreté de fonctionnement.

Un deuxième objectif est d'assurer la tenue thermique du calculateur CMM.

Un troisième objectif est réduire les contraintes associées au packaging du calculateur CMM.

Un quatrième objectif est de réduire le nombre de composants de puissance présents sur le circuit imprimé du calculateur CMM.

Un cinquième objectif est de cibler les fonctions éligibles à une réduction du nombre de composants de puissance.

Un sixième objectif est de proposer un nouveau système de commande pour la fonction Thermomanagement.

L'invention se rapporte, selon un premier aspect, à un système de commande d'actionneurs dans un véhicule automobile, ce système comprenant :
- au moins un premier et un deuxième actionneur réalisant respectivement une première et une deuxième fonction, chacune des fonctions ayant au moins un premier et un deuxième état ;
- une première structure électronique configurée pour contrôler le premier et le deuxième état de la première fonction ;
ce système, comprenant en outre :
- une deuxième structure électronique configurée pour contrôler seulement le premier état de la deuxième fonction ;
- un dispositif mécanique configuré pour contrôler le deuxième état de la deuxième fonction.

Avantageusement, dans ce système, la première structure électronique comprend un pont en H.

Avantageusement, dans ce système, la deuxième structure électronique comprend la polarisation d'un unique transistor.

Avantageusement, ce système comprend en outre quatre structures électroniques chacune contrôlant deux états d'une fonction et au moins une structure électronique contrôlant un seul état d'une fonction.

Avantageusement, dans ce système, les structures électroniques pilotant les actionneurs sont implémentées sur un circuit imprimé d'un calculateur moteur multifonction.

L'invention se rapporte, selon un deuxième aspect, à une méthode de commande d'actionneurs dans un véhicule automobile, cette méthode comprenant :
- la réalisation d'au moins une première et une deuxième fonction respectivement par un premier et un deuxième actionneur, chacune des fonctions ayant au moins un premier et un deuxième état ;
- la configuration d'une première structure électronique pour contrôler le premier et le deuxième état de la première fonction ;
cette méthode comprenant en outre :
- la configuration d'une deuxième structure électronique pour contrôler seulement le premier état de la deuxième fonction ;
- la configuration d'un dispositif mécanique pour contrôler le deuxième état de la deuxième fonction.

D'autres caractéristiques et avantages de l'invention apparaîtront plus clairement et de manière concrète à la lecture de la description ci-après de modes de réalisation préférés, laquelle est faite en référence aux figures annexées dans lesquelles :
- la Figure 1, illustre un exemple de structure de pont en H selon l'état de l'art ;
- la Figure 2, est un chronogramme illustrant une utilisation des propriétés d'une structure de pont en H selon l'état de l'art ;
- la Figure 3, illustre une représentation fonctionnelle d'un élément mis en oeuvre dans un mode de réalisation ;
- la Figure 4, est un chronogramme illustrant une utilisation des propriétés d'un élément mis en oeuvre dans un mode de réalisation.

Afin de répondre aux problématiques de contraintes thermiques du calculateur CMM, il est envisageable de réduire le nombre de composants de puissance présents dans les structures électroniques pilotant des actionneurs et les états de leurs fonctions respectives.

Pour cela, une ou plusieurs structures électroniques de commandes d'actionneurs, alternatives aux ponts en H, peuvent être proposées garantissant un maintien de l'ensemble des fonctions, sans diminuer la sûreté de fonctionnement. De préférence, le temps de réponse d'un système comprenant une structure électronique de commande d'un actionneur réalisant l'état d'une fonction, ne dépasse pas 300ms.

Ainsi à titre d'exemple non-limitatif, un système de commande électronique d'actionneur se substituant à un pont en H peut porter sur la commande de la fonction Thermomanagement.

La fonction Thermomanagement est réalisée via une pompe à eau mécanique, permettant une régulation du débit d'eau dans les différents circuits de refroidissement du véhicule (moteur, branche EGR, Aérotherme). La régulation du débit d'eau est effectuée par le pilotage bidirectionnel (selon deux états) d'un moteur électrique DC, actionnant une vanne à boisseau en sortie de la pompe. La position du boisseau permet donc de réguler le débit d'eau, lors de l'ouverture (premier état de la fonction) ou de la fermeture (deuxième état de la fonction) de la vanne par un actionneur, ici un moteur électrique. A titre d'exemple, lorsque le moteur n'a pas besoin d'être refroidi, la vanne à boisseau en sortie de la pompe peut rester fermée, permettant ainsi un échauffement rapide du moteur afin d'atteindre sa température de fonctionnement. Le refroidissement du moteur est quant à lui effectué en contrôlant, via le moteur électrique, l'ouverture ou la fermeture de la vanne à boisseau, afin de réguler le débit d'eau circulant dans les différentes branches du circuit de refroidissement.

La régulation du débit d'eau, via un contrôle de l'ouverture (premier état de la fonction) et la fermeture (deuxième état de la fonction) de la vanne à boisseau, est réalisée par l'utilisation d'une structure électronique de commande de l'actionneur (moteur), comprenant un pont en H tel que décrit précédemment sur la Figure 1 et commandé de la même manière que l'exemple de la Figure 2.

De plus, une position de sécurité (se rapportant au premier ou deuxième état de la fonction, ou encore à un troisième état distinct), couramment désignée par « failsafe » dans la littérature, permet de garantir un refroidissement de l'ensemble des circuits, par exemple en cas de panne du système de contrôle de commande de l'actionneur, de l'actionneur (moteur électrique), ou encore lors de la détection d'un échauffement anormal. Cette position de sécurité peut être mise en oeuvre via l'ouverture complète (ici premier état de la fonction) de la vanne à boisseau, assurée mécaniquement par un ressort de rappel.

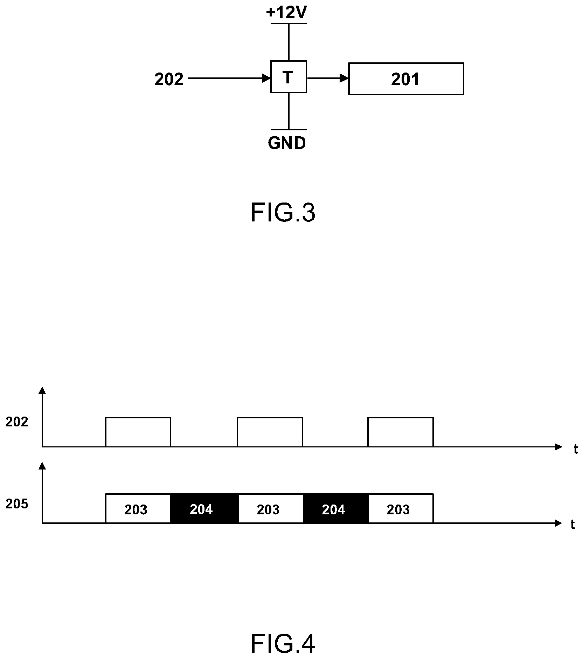

Dans un mode de réalisation, illustré en Figure 3, une structure électronique de commande d'un actionneur 201 peut être réalisée par un pilotage électronique selon un seul état (par ex. un seul sens de fonctionnement) dudit actionneur 201. Ce pilotage est effectué via un unique transistor T polarisé par une commande 202 provenant du calculateur CMM.

La Figure 4 est un chronogramme illustrant l'utilisation d'un tel pilotage électronique, appliqué à titre d'exemple non-limitatif à la fonction Thermomanagement.

La commande 202 de polarisation du transistor T permet de piloter la position du boisseau, en ne contrôlant que la fermeture 203 (deuxième état) de la vanne 205. L'ouverture 204 (premier état) de la vanne 205, s'effectue via l'utilisation d'un ressort de rappel ou tout autre dispositif mécanique configuré pour assurer cet état, tel qu'un dispositif mécanique à mémoire de forme.

Ainsi en l'absence de la commande 202, la vanne à boisseau 205 reste par défaut en position ouverte (premier état). Le chronogramme de la Figure 4 illustre ce mode de réalisation, montrant la fermeture 203 de la vanne à boisseau 205 (deuxième état) lors de l'application de la commande 202, et son ouverture 204 (premier état) par le ressort de rappel en l'absence de ladite commande 202.

Avantageusement, le pilotage selon un seul état d'un actionneur 201 par cette structure électronique permet de s'affranchir de l'utilisation d'un pont en H, nécessaire lors d'un pilotage le pilotage électronique selon deux états d'un actionneur.

Dans un mode de réalisation, une structure électronique de commande d'actionneur selon un seul état, est substituée à la structure électronique de la fonction Thermomanagement, initialement réalisée par l'utilisation d'un pont en H.

Dans un mode de réalisation préféré, l'utilisation d'une structure électronique de commande d'actionneur selon un seul état, ne se limite pas au contrôle de la fonction Thermomanagement. En effet, une telle solution peut s'appliquer à tout contrôle électronique d'un actionneur, réalisant une fonction ayant au moins deux états. Ladite fonction comporte une position/un état de sécurité et/ou une position/un état par défaut assuré mécaniquement. Un actionneur réalisant une fonction, la structure électronique de commande d'actionneur selon un seul état, permet de contrôler un premier état de ladite fonction. Le contrôle d'un deuxième état de ladite fonction est réalisé par un dispositif mécanique agencé/configuré de manière à assurer le contrôle de ce deuxième état. A titre d'exemple, une fonction peut avoir pour but la régulation d'un liquide dans un circuit de régulation. Cette fonction comprend un état par défaut (par ex. ouverture complète du circuit) assuré de manière mécanique (par ex. par un ressort de rappel) et au moins deux états (ex: ouverture / fermeture complète du circuit). Un des états (par ex. fermeture) est contrôlé par un actionneur (par ex. moteur) tandis que le deuxième état est contrôlé par le dispositif mécanique (par ex. dispositif mécanique à mémoire de forme tel qu'un ressort de rappel).

Dans un mode de réalisation, un système automobile comprend au moins deux actionneurs réalisant respectivement une première et une deuxième fonction, chacune des fonctions ayant au moins un premier et un deuxième état. La deuxième fonction comprend de plus un dispositif mécanique configuré pour assurer un état par défaut de cette fonction.

Dans ce système, au moins un premier actionneur réalisant la première fonction est piloté par une structure électronique réalisée par un pont en H, tandis qu'au moins un second actionneur réalisant la deuxième fonction est piloté par un système de commande se substituant à un pont en H.

Avantageusement, ledit système de commande se substituant au pont en H est réalisé par la structure électronique de commande d'actionneur selon un seul état précédemment décrite.

Dans un mode de réalisation, toute fonction associée à un actionneur comprenant au moins deux états, ainsi qu'une position/un état de sécurité et/ou une position/un état par défaut assuré(e) mécaniquement, peut être piloté(e)/commandé(e) par une structure électronique de commande d'actionneur selon un seul état.

Dans un mode de réalisation, l'ensemble des structures électroniques de commande (pont en H ou transistor unique) est intégré sur un circuit imprimé d'un calculateur moteur multifonction (CMM).

Dans un mode de réalisation, les structures électroniques de commandes d'actionneurs réalisées par des ponts en H, ne dépassent pas le nombre de quatre, afin de garantir la bonne tenue thermique des calculateurs CMM. Toute autre structure électronique supplémentaire est alors réalisée par une structure électronique de commande d'actionneur selon un seul état.

Avantageusement, la présente solution est compatible avec tout système ne nécessitant pas un temps de réponse inférieur à 150 ms.

Un avantage du système précédemment décrit, permet une optimisation du système de contrôle de commande (Hardware, Software) afin de répondre aux besoins fonctionnels automobiles qui demeurent eux inchangés.

De manière avantageuse, la solution répond aux besoins fonctionnels automobiles, en ne dégradant pas le temps de réponse des fonctions (temps de réponse inférieur à 300ms) et garantissant par conséquent une sûreté de fonctionnement équivalente aux solutions existantes dans l'état de l'art.

Un autre avantage de la présente solution est qu'elle permet de répondre à la problématique de contrainte thermique du calculateur CMM, tout en garantissant le raccordement de l'ensemble des fonctions.

En outre, la solution décrite permet une diminution du nombre de composants de puissance, présents sur le circuit imprimé du calculateur CMM. Ceci permet notamment de répondre aux contraintes de packaging et de coûts induits par les composants.

## Revendications

1. Système de commande d'actionneurs dans un véhicule automobile, ce système comprenant :
- au moins un premier actionneur **(101)** et un deuxième actionneur **(201)** réalisant respectivement une première et une deuxième fonction, chacune des fonctions ayant au moins un premier état **(104 ; 204)** et un deuxième état **(105 ; 203) ;**
- une première structure électronique configurée pour contrôler le premier état **(104)** et le deuxième état **(105)** de la première fonction ;
ce système étant **caractérisé en ce qu'**il comprend en outre :
- une deuxième structure électronique configurée pour contrôler seulement le premier état **(203)** de la deuxième fonction ;
- un dispositif mécanique configuré pour contrôler le deuxième état **(204)** de la deuxième fonction.

2. Système selon la revendication 1, **caractérisé en ce que** la première structure électronique comprend un pont en H.

3. Système selon les revendications 1 ou 2, **caractérisé en ce que** la deuxième structure électronique comprend la polarisation d'un unique transistor **(T).**

4. Système selon l'une quelconque des revendications 1 à 3, **caractérisé en ce que** le dispositif mécanique comprend un moyen mécanique à mémoire de forme.

5. Système selon la revendication 4, **caractérisé en ce que** le moyen mécanique à mémoire de forme est un ressort de rappel.

6. Système selon l'une quelconque des revendications 1 à 5, **caractérisé en ce qu'**il comprend quatre structures électroniques chacune contrôlant deux états d'une fonction et au moins une structure électronique contrôlant un seul état d'une fonction.

7. Système selon l'une quelconque des revendications 1 à 6, **caractérisé en ce que** les structures électroniques pilotant les actionneurs sont implémentées sur un circuit imprimé d'un calculateur moteur multifonction.

8. Système selon l'une quelconque des revendications 1 à 7, **caractérisé en ce que** la deuxième fonction est une fonction de gestion de température.

9. Système selon la revendication 8, **caractérisé en ce que** la fonction de gestion de température est réalisée par la régulation d'un liquide dans un circuit de circulation.

10. Méthode de commande d'actionneurs dans un véhicule automobile, cette méthode comprenant les opérations consistant à :
- réaliser au moins une première et une deuxième fonction respectivement par un premier actionneur **(101)** et un deuxième actionneur **(201),** chacune des fonctions ayant au moins un premier état **(104 ; 204)** et un deuxième état **(105 ; 203) ;**
- contrôler le premier état **(104)** et le deuxième état **(105)** état de la première fonction au moyen d'une première structure électronique ;
cette méthode, étant **caractérisée en ce qu'**elle comprend en outre les opérations consistant à :
- contrôler seulement le premier état **(204)** de la deuxième fonction au moyen d'une deuxième structure électronique ;
- contrôler le deuxième état **(203)** de la deuxième fonction au moyen d'un dispositif mécanique.

## Patentansprüche

1. Steuersystem von Aktuatoren in einem Kraftfahrzeug, wobei das System Folgendes umfasst:
- mindestens einen ersten Aktuator (101) und einen zweiten Aktuator (201), die jeweils eine erste und eine zweite Funktion ausführen, wobei jede der Funktionen mindestens einen ersten Zustand (104; 204) und einen zweiten Zustand (105; 203) hat;
- eine erste elektronische Struktur, die konfiguriert ist, um den ersten Zustand (104) und den zweiten Zustand (105) der ersten Funktion zu steuern;
System **dadurch gekennzeichnet, dass** es außerdem Folgendes umfasst:
- eine erste elektronische Struktur, die konfiguriert ist, um nur den ersten Zustand (203) der zweiten Funktion zu steuern;
- eine mechanische Vorrichtung, die konfiguriert ist, um den zweiten Zustand (204) der zweiten Funktion zu steuern.

2. System nach Anspruch 1, **dadurch gekennzeichnet, dass** die erste elektronische Struktur eine H-förmige Brücke umfasst.

3. System nach den Ansprüchen 1 oder 2, **dadurch gekennzeichnet, dass** die zweite elektronische Struktur die Polarisation eines einzigen Transistors (T) umfasst.

4. System nach einem der Ansprüche 1 bis 3, **dadurch gekennzeichnet, dass** die mechanische Vorrichtung ein mechanisches Mittel mit Formgedächtnis umfasst.

5. System nach Anspruch 4, **dadurch gekennzeichnet, dass** das mechanische Mittel mit Formgedächtnis eine Rückstellfeder ist.

6. System nach einem der Ansprüche 1 bis 5, **dadurch gekennzeichnet, dass** es vier elektronische Strukturen umfasst, die jeweils zwei Zustände einer Funktion steuern, und mindestens eine elektronische Struktur, die einen einzigen Zustand einer Funktion steuert.

7. System nach einem der Ansprüche 1 bis 6, **dadurch gekennzeichnet, dass** die elektronischen Strukturen, die die Aktuatoren steuern, auf einer Leiterplatte eines Multifunktionsmotorrechners umgesetzt sind.

8. System nach einem der Ansprüche 1 bis 7, **dadurch gekennzeichnet, dass** die zweite Funktion eine Temperaturverwaltungsfunktion ist.

9. System nach Anspruch 8, **dadurch gekennzeichnet, dass** die Temperaturverwaltungsfunktionen durch die Regulierung einer Flüssigkeit in einem Umwälzkreislauf ausgeführt wird.

10. Verfahren zum Steuern von Aktuatoren in einem Kraftfahrzeug, wobei das Verfahren die folgenden Vorgänge umfasst:
- Ausführen mindestens einer ersten und einer zweiten Funktion jeweils durch einen ersten Aktuator (101) und einen zweiten Aktuator (201), wobei jede der Funktionen mindestens einen ersten Zustand (104; 204) und einen zweiten Zustand (105; 203) hat;
- Steuern des ersten Zustands (104) und des zweiten Zustands (105) der ersten Funktion mittels einer ersten elektronischen Struktur;
Verfahren **dadurch gekennzeichnet, dass** es außerdem die folgenden Vorgänge umfasst:
- Steuern nur des ersten Zustands (204) der zweiten Funktion mittels einer zweiten elektronischen Struktur;
- Steuern des zweiten Zustands (203) der zweiten Funktion mittels einer mechanischen Vorrichtung.

## Claims

1. A system for controlling actuators in a motor vehicle, this system including:
- at least a first actuator (101) and a second actuator (201) respectively carrying out a first and a second function, each of the functions having at least a first state (104; 204) and a second state (105; 203);
- a first electronic structure configured to control the first state (104) and the second state (105) of the first function;
this system being **characterized in that** it further includes:
- a second electronic structure configured to control only the first state (203) of the second function;
- a mechanical device configured to control the second state (204) of the second function.

2. The system according to Claim 1, **characterized in that** the first electronic structure includes an H-shaped bridge.

3. The system according to Claims 1 or 2, **characterized in that** the second electronic structure includes the polarisation of a single transistor (T).

4. The system according to any one of Claims 1 to 3, **characterized in that** the mechanical device includes a shape-memory mechanical means.

5. The system according to Claim 4, **characterized in that** the shape-memory mechanical means is a return spring.

6. The system according to any one of Claims 1 to 5, **characterized in that** it includes four electronic structures, each controlling two states of a function and at least one electronic structure controlling a single state of a function.

7. The system according to any one of Claims 1 to 6, **characterized in that** the electronic structures driving the actuators are implemented on a printed circuit of a multifunction engine control unit.

8. The system according to any one of Claims 1 to 7, **characterized in that** the second function is a temperature management function.

9. The system according to Claim 8, **characterized in that** the temperature management function is realized by the regulation of a liquid in a circulation circuit.

10. A method for controlling actuators in a motor vehicle, this method including the operations consisting in:
- carrying out at least a first and a second function respectively by a first actuator (101) and a second actuator (201), each of the functions having at least a first state (104; 204) and a second state (105; 203);
- controlling the first state (104) and the second state (105) of the first function by means of a first electronic structure;
this method, being **characterized in that** it further includes the operations consisting in:
- controlling only the first state (204) of the second function by means of a second electronic structure;
- controlling the second state (203) of the second function by means of a mechanical device.
